# EUROPÄISCHE PATENTSCHRIFT

(11) **EP 2 162 483 B1**
(45) Veröffentlichungstag und Bekanntmachung des Hinweises auf die Patenterteilung: **14.05.2014**
(21) Anmeldenummer: 08750325.6
(22) Anmeldetag: 16.05.2008
(51) Int. Cl.: C08G 63/685, C08G 63/91

(54) **AMINOGRUPPENHALTIGE POLYESTER**
POLYESTERS CONTAINING AMINO GROUPS
POLYESTERS CONTENANT DES GROUPES AMINO

(30) Priorität: 02.07.2007 DE 102007030669
(43) Veröffentlichungstag der Anmeldung: 17.03.2010
(73) Patentinhaber: Evonik Degussa GmbH, 45128 Essen (DE)
(72) Erfinder: SPYROU, Emmanouil, 46514 Schermbeck (DE)
(86) Internationale Anmeldenummer: PCT/EP2008/056034
(87) Internationale Veröffentlichungsnummer: WO 2009/003754

(56) Entgegenhaltungen:
- EP-A- 0 115 072
- EP-A- 1 489 126
- US-A- 2 969 335
- US-A- 3 715 335

## Beschreibung

Die vorliegende Erfindung betrifft Polyester, die mit ein oder mehreren Polyaminen mit mindestens einer primären und mindestens einer sekundären Aminogruppe modifiziert sind, Verfahren zu deren Herstellung sowie deren Verwendung.

Polyester sind eine weit verbreitete und vielfach eingesetzte Polymerklasse, deren Eigenschaften und Herstellverfahren in vielen Schriften dokumentiert sind. Die Umsetzung von Polyestern oder deren Ausgangsstoffen mit Aminen ist ebenfalls bekannt.

US 5,672,676 beschreibt die Umsetzung von Dicarbonsäuren, Dialkoholen und Diaminen in der Schmelze. Es werden dabei aber lediglich primäre Amine eingesetzt und im Endprodukt sind keine Amine detektierbar.

In der WO 2003/078502 wird die Umsetzung von Polyestern mit stickstoffhaltigen Komponenten, z. B. Aminen, beschrieben. Es geht hierbei um die Modifizierung von thermoplastischen Polyestern, um so die Kristallisationstemperatur und Rheologie zu beeinflussen. Das in den Beispielen eingesetzte Ethylendiamin wird, analytisch nachgewiesen, vollständig als Amid eingebaut. Es treten also im Endprodukt keine freien Amine auf.

In US 4,604,449 wird die Aminolyse von Polyestern beschrieben. Dabei kommen primäre Diamine oder Aminoalkohole zum Einsatz. Der Verbleib von freien Aminogruppen oder das Maß der Lagerstabilität wird hier nicht erwähnt.

Auch aminterminierte Polyester sind beschrieben. In der US 5,525,683 werden hydroxyfunktionelle Polyester mit einer Abgangsgruppe versehen und dann mit einem Aminoalkohol umgesetzt. So entstehen dann etherverbrückte aminterminierte Polyester. Dieser Vorgang ist recht aufwendig, außerdem wird hier die Lagerstabilität der Endprodukte weder erwähnt noch gemessen.

Die DE 4244030 beschreibt die Anlagerung von Ammoniak oder Aminen an olefinisch ungesättigten Struktureinheiten von Polyestern. Dieses Verfahren ist aber auf solche Polyester beschränkt, die eben diese ungesättigten Einheiten aufweisen.

Die EP 0 115 072, US 3,715,335 und US 2,969,335 offenbaren Poylester, die mit einem Polyamin modifiziert sind, welches sowohl primäre als auch sekundäre Aminogruppen enthält.

EP 1 489 126 beschreibt Polyaminoester mit einem Polymerbackbone umfassend mindestens eine sekundäre Aminverknüpfung und mindestens eine tertiäre Aminverknüpfung.

Aminterminierte Polyester sind zwar nützliche Bestandteile von Beschichtungs-, Klebstoff- und Druckfarbenformulierungen, haben aber in der Regel Nachteile: Der erste Nachteil ist in der Herstellung begründet, da hohe Temperaturen hier zu Verfärbungen führen. Der zweite Nachteil besteht in der eingeschränkten Lagerstabilität solcher Produkte, da freie Amingruppen dazu neigen, noch vorhandene Estergruppen anzugreifen und dabei unter Amidbildung Alkohole freisetzen.

Ziel der vorliegenden Erfindung war es daher, aminterminierte Polyester herzustellen, die nicht nur vergilbungsarm, sondern darüber hinaus auch lagerstabil sind.

Überraschend wurde gefunden, dass Polyester mit Polyaminen umgesetzt werden können, die mindestens eine primäre und eine sekundäre Aminogruppe enthalten. Wird dabei die Temperatur moderat gehalten, leiden weder Farbe noch die Lagerstabilität.

Demgemäß sind ein erster Gegenstand der vorliegenden Erfindung Polyester gemäß Anspruch 1, die mit ein oder mehreren Polyaminen mit mindestens einer primären und mindestens einer sekundären Aminogruppe modifiziert sind. Vorzugsweise liegen in dem Polyester pro primärer Aminogruppe des Polyamins mindestens zwei Estergruppen des Polyesters vor.

Die erfindungsgemäßen Polyester haben gegenüber den im Stand der Technik genannten Polyestern den wesentlichen Vorteil, dass sie lagerstabil sind. Als lagerstabil gelten Produkte, die nach 28 Tagen bei 40 °C nicht mehr als 20 % vom Ausgangswert an titrimetrisch nachweisbaren Aminen abweichen. Darüber hinaus sind die erfindungsgemäßen Polyester auch farblich lagerstabil. Als farblich lagerstabil gelten Produkte, die gelblich gefärbt sind, nicht aber braun oder gar schwarz verfärbt.

Die erfindungsgemäßen Polyester sind erhältlich durch Umsetzung eines Polyesters mit ein oder mehreren Polyaminen mit mindestens einer primären und mindestens einer sekundären Aminogruppe. Die Umsetzung erfolgt erfindungsgemäß besonders bevorzugt bei einer Temperatur von 20 - 200 °C. Die Umsetzung erfolgt dabei in einem Zeitraum von 1 Minute bis 4 Wochen. Ziel der Reaktionsführung ist die fast vollständige Reaktion der primären Aminogruppen mit dem Polyester wobei die sekundären Aminogruppen dagegen fast gar nicht mit dem Polyester reagiert haben. Insgesamt ist bevorzugt darauf zu achten, dass das Verhältnis von Polyester zu Polyamin so gewählt ist, dass auf eine primäre Amingruppe des Polyamins mindestens zwei Estergruppen des Polyesters kommen.

Die erfindungsgemäß eingesetzten Polyester sind erhältlich durch Polykondensation von einer oder mehreren Dicarbonsäuren und ein oder mehreren Diolen und/oder Polyolen. Die Kondensation erfolgt auf an sich bekannte Weise in einer Inertgas-Atmosphäre bei Temperaturen von 100 bis 260 °C, vorzugsweise 130 bis 220 °C, in der Schmelze oder in azeotroper Fahrweise, wie es z. B. in Methoden der Organischen Chemie (Houben-Weyl); Band 14/2, Seiten 1 bis 5, 21 bis 23, 40 bis 44, Georg Thieme Verlag, Stuttgart, 1963, oder bei C. R. Martens, Alkyd Resins, Seiten 51 bis 59, Reinhold Plastics Appl. Series, Reinhold Publishing Comp., New York, 1961, beschrieben ist.

Die für die Herstellung von Polyestern eingesetzten Dicarbonsäuren sind Bernstein-, Adipin-, Kork-, Azelain, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutarsäure, 1,4-Cyclohexandicarbonsäure bzw. - soweit zugänglich - deren Anhydride oder Ester genannt.

Die Diole und/oder Polyole sind ausgewählt aus der Gruppe umfassend Monoethylenglykol, 1,2- und 1,3-Propylenglykol, 1,4- und 2,3-Butylenglykol, Di-ß-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), Bis-(1,4-hydroxymethyl)-cyclohexan, 2,2-Bis-(4-hydroxycyclohexyl)-propan, 2,2-Bis-[4-(ß-hydroxyethoxy)-phenyl]-propan, 2-Methyl-propandiol-1,3, 2-Methyl-pentandiol-1,5, 2,2,4(2,4,4)-Trimethylhexandiol-1,6, Glycerin, Trimethylolpropan, Trimethylolethan, Hexantriol-1,2,6, Butantriol-1,2,4, Tris-(ß-hydroxyethyl)-Isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester.

Bevorzugt werden hydroxyfunktionelle Polyester eingesetzt mit einer OH-Zahl von 1 bis 400 mg KOH/g, besonders bevorzugt 5 bis 150. Die Hydroxylzahl wird bestimmt nach DIN 53240-2.
Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt.

Wesentlich für die vorliegende Erfindung ist, dass die oben genannten Polyester mit Polyaminen modifizert sind, wobei die Polyamine mindestens eine primäre und mindestens eine sekundäre Aminogruppe aufweisen. Grundsätzlich sind alle Polyamine, die diese Bedingungen erfüllen als erfindungsgemäße einzusetzende Polyamine geeignet. Die Polyamine können dabei aliphatisch, cyloaliphatisch, aromatisch und/oder heterocyclisch sein, insbesondere sind sie aliphatisch und/oder cyloaliphatisch. Insbesondere ist das Polyamin ausgewählt aus der Gruppe umfassend N-Methyl-ethylendiamin, N-Ethyl-ethylendiamin, N-propyl-ethylendiamin, N-Butyl-ethylendiamin, N-Benzyl-ethylendiamin, N-Phenyl-ethylendiamin, N-Methyl-propylendiamin, N-Ethyl-propylendiamin, N-propyl-propylendiamin, N-Butyl-propylendiamin, N-Benzyl-propylendiamin, N-Phenyl-propylendiamin N-Hydroxyethyl-ethylendiamin, Diethylentriamin, Triethylentetramin, Pentaethylenhexamin, Bishexamethylentriamin, N-Cyclohexylpropylendiamin und N[3-(Tridecyloxy)propyl]-1,3-propandiamin (Adogen 583).

Die bevorzugten aminmodifizierten Endprodukte weisen eine Aminzahl von 5 bis 100 auf und eine OH-Zahl von 6 bis 155 mg KOH/g. Besonders bevorzugt werden eine Aminzahl von 10 bis 50 und eine OH-Zahl von 11 bis 101. Die Aminzahl wird durch Titration mit 1 N-Salzsäure gegen Bromphenolblau bestimmt.

Ebenfalls Gegenstand der vorliegenden Erfindung sind Verfahren zur Herstellung der erfindungsgemäßen Polyester umfassend die Umsetzung eines Polyesters mit ein oder mehreren Polyaminen mit mindestens einer primären und mindestens einer sekundären Aminogruppe. Die Umsetzung erfolgt insbesondere bei einer Temperatur von 20 - 200 °C. Weiterhin kann die Umsetzung in einem Zeitraum von 1 Minute bis zu 4 Wochen erfolgen. Bevorzugt erfolgt die Umsetzung bei einer Temperatur von 80 - 140 °C, bei einer Reaktionszeit von 5 Minuten bis zu 5 Stunden. Besonders bevorzugt erfolgt die Umsetzung über einen Zeitraum von 10 Minuten bis 3 Stunden bei einer Temperatur von 90 - 130 °C.

In einer Ausführungsform der vorliegenden Erfindung kann die Umsetzung des Polyesters mit den ein oder mehreren Polyaminen ohne Zusatz eines Lösungsmittels erfolgen. Vorzugsweise erfolgt in diesem Falle die Umsetzung in einer Schmelze. Üblicherweise wird hierbei der Polyester aufgeschmolzen und mit den ein oder mehreren Polyaminen umgesetzt. Vorzugsweise erfolgt diese Umsetzung unter Schutzgas, beispielsweise Stickstoff oder Argon, insbesondere unter Stickstoff.

In einer alternativen Ausführungsform der vorliegenden Erfindung erfolgt die Umsetzung in Gegenwart eines Lösungsmittels. Insbesondere ist das Lösungsmittel ausgewählt aus der Gruppe umfassend Benzol, Toluol, Aromatengemische (Handelsbezeichnung Solvesso), und sonstige übliche Lacklösemittel.

Als Reaktionsaggregate für die Umsetzung kommen beispielsweise beheizbare Rührkessel, Kneter oder auch Extruder in Frage. Sowohl die Ausgangsprodukte als auch das erfindungsgemäße Endprodukt können fest oder flüssig sein. Die Reaktionstemperatur sollte vorzugsweise so gewählt werden, dass alle Bestandteile flüssig in der gleichen Phase vorliegen.

Die Reaktion wird dabei so geführt, dass die reaktiveren primären Aminogruppen abreagieren, nicht aber die weniger reaktiven sekundären Aminogruppen. Der Endpunkt ist erreicht, wenn der Gehalt an titrimetrisch nachweisbaren Aminogruppen nicht mehr als 20 % von dem rechnerischen Gehalt an sekundären Aminogruppen abweicht.

Ein weiterer Gegenstand der vorliegenden Erfindung ist die Verwendung der erfindungsgemäßen Polyester in Beschichtungen, insbesondere in wärmehärtenden 1 K oder 2K-Formulierungen, für z. B. Coil-coating, Cancoating, Industrielackierungen, Bautenschutz, Parkettbeschichtungen, Automobillackierungen, aber auch für Klebstoffanwendungen, insbesondere reaktive Klebstoffsysteme.

Beschichtungen enthaltend die erfindungsgemäßen Polyester sind ebenfalls Gegenstand der vorliegenden Erfindung.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele:

| **Einsatzstoffe** | **Produktbeschreibung, Hersteller** |
|---|---|
| Dynacoll 7390 | Hydroxylgruppenhaltiges Polyester-Harz, Degussa GmbH, Coatings & Colorants, OH-Zahl 30 mg KOH/g, Schmp. 110 °C |
| Oxyester T 1136 | Hydroxylgruppenhaltiges Polyester-Harz, Degussa GmbH, Coatings & Colorants, OH-Zahl 107 mg KOH/g |
| Dynapol L 411 | Hydroxylgruppenhaltiges Polyester-Harz, Degussa GmbH, Coatings & Colorants, OH-Zahl 5-10 mg KOH/g, Schmp. 110 °C |
| DETA | Diethylentriamin, Aldrich |
| HA200ND | Aromatengemisch mit geringem Naphthalinanteil, Lösemittel, DHC Solvent Chemie GmbH |

### Beispiel 1:

90 g Dynacoll 7390 werden bei 110 °C aufgeschmolzen und unter Stickstoff mit 10 g DETA versetzt. Nach 10 min intensiven Rühren wird abgekühlt und die Aminzahl bestimmt (Titrimetrisch mit 1 N HCL gegen Bromphenolblau). Diese ist von anfangs 163 auf 55 mg KOH/g gesunken (rechnerisch sollte bei einer verbleibenden Aminogruppe eine Aminzahl von 57 mg KOH/g verbleiben). Zur Bestimmung der Lagerstabilität wird das Produkt 4 Wochen bei 40 °C gehalten und erneut die Aminzahl gemessen. Diese liegt nach dieser Zeit bei 54 mg KOH/g. Das Produkt ist leicht gelblich verfärbt.

### Beispiel 2:

90 g Oxyester T 1136 werden auf 110 °C aufgeheizt und unter Stickstoff mit 10 g DETA versetzt. Nach 60 min intensiven Rühren wird abgekühlt und die Aminzahl bestimmt (Titrimetrisch mit 1 N HCL gegen Bromphenolblau). Diese ist von anfangs 163 auf 64 mg KOH/g gesunken (rechnerisch sollte bei einer verbleibenden Aminogruppe eine Aminzahl von 57 mg KOH/g verbleiben). Zur Bestimmung der Lagerstabilität wird das Produkt 4 Wochen bei 40 °C gehalten und erneut die Aminzahl gemessen. Diese liegt nach dieser Zeit bei 60 mg KOH/ g. Das Produkt ist leicht gelblich verfärbt.

### Beispiel 3:

97,5 g Dynapol L 411 werden in 185 g HA200ND / Methoxypropylacetat (1:1) gelöst, auf 110 °C aufgeheizt und unter Stickstoff mit 2,5 g DETA versetzt. Nach 180 min intensiven Rühren wird abgekühlt und die Aminzahl bestimmt (Titrimetrisch mit 1 N HCL gegen Bromphenolblau). Diese ist von anfangs 33 auf 12 mg KOH/ g gesunken. (rechnerisch sollte bei einer verbleibenden Aminogruppe eine Aminzahl von 13,5 mg KOH/ g verbleiben). Zur Bestimmung der Lagerstabilität wird das Produkt 4 Wochen bei 40 °C gehalten und erneut die Aminzahl gemessen. Diese liegt nach 4 Wochen immer noch bei 12 mg KOH/g.
Alle Aminzahlen in diesem Beispiel sind auf 100 % Feststoff hochgerechnet. Das Produkt ist gelblich verfärbt.

## Patentansprüche

1. Polyester, **dadurch gekennzeichnet, dass** sie mit einem oder mehreren Polyaminen mit mindestens einer primären und mindestens einer sekundären Aminogruppe modifiziert sind, wobei die Polyester erhältlich sind durch Polykondensation von einer oder mehreren Dicarbonsäuren und ein oder mehreren Diolen und/oder Polyolen, wobei die Dicarbonsäuren ausgewählt sind aus Bernstein-, Adipin-, Kork-, Azelain-, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutarsäure, 1,4-Cyclohexandicarbonsäure bzw. deren Anhydride oder Ester und die Diole und/oder Polyole ausgewählt sind aus der Gruppe umfassend Monoethylenglykol, 1,2- und 1,3-Propylenglykol, 1,4- und 2,3-Butylenglykol, Di-ß-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.02,6]decan, Bis (1,4 hydroxymethyl)-cyclohexan, 2,2-Bis-(4-hydroxycyclohexyl)-propan, 2,2-Bis-[4-(ß-hydroxyethoxy)-phenyl]-propan, 2-Methyl-propandiol-1,3, 2 Methyl-pentandiol-1,5, 2,2,4(2,4,4)-Trimethylhexandiol-1,6, Glycerin, Trimethylolpropan, Trimethylolethan, Hexantriol-1,2,6, Butan-triol-1,2,4, Tris (ß-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester.

2. Polyester gemäß Anspruch 1, **dadurch gekennzeichnet, dass** in dem Polyester pro primärer Aminogruppe des Polyamins mindestens zwei Estergruppen des Polyesters vorliegen.

3. Polyester gemäß Anspruch 1 oder 2, **dadurch gekennzeichnet, dass** sie lagerstabil sind.

4. Polyester gemäß einem oder mehreren der Ansprüche 1 bis 3, **dadurch gekennzeichnet, dass** der Anteil der titrimetrisch nachweisbaren Aminogruppen nach 28 Tagen bei 40 °C nicht mehr als 20 % vom ursprünglichen Anteil abweicht.

5. Polyester gemäß einem oder mehreren der Ansprüche 1 bis 4, erhältlich durch Umsetzung eines Polyesters mit ein oder mehreren Polyaminen mit mindestens einer primären und mindestens einer sekundären Aminogruppe.

6. Polyester gemäß einem oder mehreren der Ansprüche 1 bis 5, **dadurch gekennzeichnet, dass** das Polyamin aliphatisch, cyloaliphatisch, aromatisch und/oder heterocyclisch ist.

7. Verfahren zur Herstellung von Polyestern gemäß Anspruch 1, umfassend die Umsetzung eines Polyesters mit ein oder mehreren Polyaminen mit mindestens einer primären und mindestens einer sekundären Aminogruppe.

8. Verfahren gemäß Anspruch 7, **dadurch gekennzeichnet, dass** die Umsetzung bei einer Temperatur von 20 - 200 °C erfolgt.

9. Verfahren gemäß Anspruch 7 oder 8, **dadurch gekennzeichnet, dass** die Umsetzung in einem Zeitraum von 1 Minute bis zu 4 Wochen erfolgt.

10. Verfahren gemäß einem oder mehreren der Ansprüche 7 bis 9, **dadurch gekennzeichnet, dass** die Umsetzung ohne Zusatz eines Lösungsmittels erfolgt.

11. Verfahren gemäß einem oder mehreren der Ansprüche 7 bis 10, **dadurch gekennzeichnet, dass** die Umsetzung in der Schmelze erfolgt.

12. Verfahren gemäß einem oder mehreren der Ansprüche 7 bis 11, **dadurch gekennzeichnet, dass** die Umsetzung in Gegenwart eines Lösungsmittels erfolgt.

13. Verwendung von Polyestern gemäß einem oder mehreren der Ansprüche 1 bis 6 in Beschichtungen.

14. Beschichtungen enthaltend Polyester gemäß einem oder mehreren der Ansprüche 1 bis 6.

## Claims

1. Polyesters **characterized in that** they have been modified with one or more polyamines having at least one primary and at least one secondary amino group, wherein the polyesters are obtainable by polycondensing one more dicarboxylic acids and one or more diols and/or polyols, wherein the dicarboxylic acids are selected from succinic, adipic, suberic, azelaic, sebacic, phthalic, terephthalic, isophthalic, trimellitic, pyromellitic, tetrahydrophthalic, hexahydrophthalic, hexahydroterephthalic, dichlorophthalic, tetrachlorophthalic, endomethylenetetrahydrophthalic, glutaric and 1,4-cyclohexanedicarboxylic acid and/or their anhydrides or esters and the diols and/or polyols are selected from the group encompassing monoethylene glycol, 1,2- and 1,3-propylene glycol, 1,4- and 2,3-butylene glycol, di-β-hydroxyethylbutanediol, 1,5-pentanediol, 1,6-hexanediol, 1,8-octanediol, decanediol, dodecanediol, neopentyl glycol, cyclohexanediol, 3(4),8(9)-bis(hydroxymethyl)tricyclo[5.2.1.0^{2,6}]decane, 1,4-bis(hydroxymethyl)cyclohexane, 2,2-bis(4-hydroxy-cyclohexyl)propane, 2,2-bis[4-(β-hydroxyethoxy)-phenyl]propane, 2-methylpropane-1,3-diol, 2-methylpentane-1,5-diol, 2,2,4(2,4,4)-trimethylhexane-1,6-diol, glycerol, trimethylolpropane, trimethylolethane, hexane-1,2,6-triol, butane-1,2,4-triol, tris(β-hydroxyethyl) isocyanurate, pentaerythritol, mannitol and sorbitol and also diethylene glycol, triethylene glycol, tetraethylene glycol, dipropylene glycol, polypropylene glycols, polybutylene glycols, xylylene glycol and neopentyl glycol hydroxypivalate.

2. Polyesters according to Claim 1, **characterized in that** in the polyester there are at least two ester groups of the polyester per primary amino group of the polyamine.

3. Polyester according to Claim 1 or 2, **characterized in that** they are storage-stable.

4. Polyesters according to one or more of Claims 1 to 3, **characterized in that** the fraction of titrimetrically detectable amino groups after 28 days at 40°C differs by not more than 20% from the original fraction.

5. Polyesters according to one or more of Claims 1 to 4, obtainable by reacting a polyester with one or more polyamines having at least one primary and at least one secondary amino group.

6. Polyesters according to one or more of Claims 1 to 5, **characterized in that** the polyamine is aliphatic, cycloaliphatic, aromatic and/or heterocyclic.

7. Process for preparing polyesters according to Claim 1, that comprises reacting a polyester with one or more polyamines having at least one primary and at least one secondary amino group.

8. Process according to Claim 7, **characterized in that** the reaction takes place at a temperature of 20 - 200°C.

9. Process according to Claim 7 or 8, **characterized in that** the reaction takes place within a period from 1 minute up to 4 weeks.

10. Process according to one or more of Claims 7 to 9, **characterized in that** the reaction takes place without the addition of a solvent.

11. Process according to one or more of Claims 7 to 10, **characterized in that** the reaction takes place in the melt.

12. Process according to one or more of Claims 7 to 11, **characterized in that** the reaction takes place in the presence of a solvent.

13. Use of polyesters according to one or more of Claims 1 to 6 in coatings.

14. Coatings comprising polyesters according to one or more of Claims 1 to 6.

## Revendications

1. Polyesters, **caractérisés en ce qu'**ils sont modifiés par une ou plusieurs polyamines présentant au moins un groupe amino primaire et au moins un groupe amino secondaire, les polyesters pouvant être obtenus par polycondensation d'un ou de plusieurs acides dicarboxyliques et d'un ou de plusieurs diols et/ou polyols, les acides dicarboxyliques étant choisis parmi l'acide succinique, adipique, subérique, azélaïque, sébacique, phtalique, téréphtalique, isophtalique, trimellitique, pyromellitique, tétrahydrophtalique, hexahydrophtalique, hexahydrotéréphtalique, dichlorophtalique et tétrachlorophtalique, endométhylènetétrahydrophtalique, glutarique, 1,4-cyclohexanedicarboxylique ou leurs anhydrides ou esters et les diols et/ou polyols étant choisis dans le groupe comprenant le monoéthylèneglycol, le 1,2-propylèneglycol et le 1,3-propylèneglycol, le 1,4-butylèneglycol et le 2,3-butylèneglycol, le di-ß-hydroxyéthylbutanediol, le 1,5-pentanediol, le 1,6-hexanediol, le 1,8-octanediol, le décanediol, le dodécanediol, le néopentylglycol, le cyclohexanediol, le 3(4),8(9)-bis(hydroxyméthyl)tricyclo[5.2.1.0^{2,6}]décane, le bis(1,4-hydroxyméthyl)-cyclohexane, le 2,2-bis-(4-hydroxycyclohexyl)-propane, le 2,2-bis-[4-(ß-hydroxyéthoxy)-phényl]-propane, le 2-méthylpropanediol-1,3, le 2-méthylpentanediol-1,5, le 2,2,4(2,4,4)-triméthylhexanediol-1,6, le glycérol, le triméthylolpropane, le triméthyloléthane, l'hexanetriol-1,2,6, le butanetriol-1,2,4, le tris-(ß-hydroxyéthyl)-isocyanurate, le pentaérythritol, le mannitol et le sorbitol ainsi que le diéthylèneglycol, le triéthylèneglycol, le tétraéthylèneglycol, le dipropylèneglycol, les polypropylèneglycols, les polybutylèneglycols, le xylylèneglycol et l'ester néopentylglycolique de l'acide hydroxypivalique.

2. Polyesters selon la revendication 1, **caractérisés en ce qu'**il existe au moins deux groupes ester du polyester par groupe amino primaire de la polyamine dans le polyester.

3. Polyesters selon la revendication 1 ou 2, **caractérisés en ce qu'**ils sont stables à l'entreposage.

4. Polyesters selon l'une quelconque des revendications 1 à 3, **caractérisés en ce que** la proportion de groupes amino pouvant être détectés par titrimétrie après 28 jours à 40°C ne s'écarte pas de plus de 20% de la proportion initiale.

5. Polyesters selon l'une ou plusieurs des revendications 1 à 4, pouvant être obtenus par transformation d'un polyester avec une ou plusieurs polyamines présentant au moins un groupe amino primaire et au moins un groupe amino secondaire.

6. Polyesters selon l'une quelconque des revendications 1 à 5, **caractérisés en ce que** la polyamine est aliphatique, cycloaliphatique, aromatique et/ou hétérocyclique.

7. Procédé pour la préparation de polyesters selon la revendication 1, comprenant la transformation d'un polyester avec une ou plusieurs polyamines présentant au moins un groupe amino primaire et au moins un groupe amino secondaire.

8. Procédé selon la revendication 7, **caractérisé en ce que** la transformation a lieu à une température de 20-200°C.

9. Procédé selon la revendication 7 ou 8, **caractérisé en ce que** la transformation a lieu en un laps de temps de 1 minute à 4 semaines.

10. Procédé selon l'une ou plusieurs des revendications 7 à 9, **caractérisé en ce que** la transformation a lieu sans addition de solvant.

11. Procédé selon l'une ou plusieurs des revendications 7 à 10, **caractérisé en ce que** la transformation a lieu en masse fondue.

12. Procédé selon l'une ou plusieurs des revendications 7 à 11, **caractérisé en ce que** la transformation a lieu en présence d'un solvant.

13. Utilisation de polyesters selon l'une ou plusieurs des revendications 1 à 6 dans des revêtements.

14. Revêtements contenant des polyesters selon l'une ou plusieurs des revendications 1 à 6.
